# FASCICULE DE BREVET EUROPEEN

(11) **EP 1 054 118 B1**
(45) Date de publication et mention de la délivrance du brevet: **04.08.2004**
(21) Numéro de dépôt: 00440151.9
(22) Date de dépôt: 19.05.2000
(51) Int. Cl.: E04F 19/04

(54) **Pièce d'angle à désalignement pour le raccordement de deux tronçons successifs d'une plinthe ou analogue**
Versatztolerantes Eckstück zum Verbinden von zwei aufeinanderfolgenden Winkelabschnitten eines Sockelleistenkanals oder dergleichen
Misalignment-tolerant corner piece for connecting two adjoining angle sections of a plinth or similar

(30) Priorité: 20.05.1999 FR 9906548
(43) Date de publication de la demande: 22.11.2000
(73) Titulaire: Rehau S.A., 57340 Morhange (FR)
(72) Inventeur: Stengel, Christian, 57340 Ragrange (FR); Frey, Bertrand, 57340 Ragrange (FR)
(74) Mandataire: Metz, Paul

(56) Documents cités:
- EP-A- 0 734 107
- EP-A- 0 932 232
- DE-U- 29 611 092
- FR-A- 2 731 496
- FR-A- 2 768 571
- GB-A- 2 031 232

## Description

La présente invention concerne le domaine de la distribution électrique par l'intermédiaire de conducteurs de type filaire logés dans des profilés linéaires creux, dans les habitations et les bâtiments.

Dans les constructions actuelles, ces conducteurs circulent dans les murs et les cloisons et demeurent invisibles. Ils ne débouchent qu'aux endroits nécessaires de raccordement à travers une découpe de la paroi.

Cependant lors des travaux dits de rénovation, la situation est différente. Le passage des conducteurs de distribution électrique à travers et le long des murs et des plafonds n'ayant pas été prévu à la conception, l'utilisation du système précédent est beaucoup trop coûteuse et compliquée. En effet, elle implique le perçage des cloisons, murs ou plafonds et la réalisation de rainures pour le passage des conducteurs. Une telle opération demande beaucoup de travail. Elle est longue, difficile à réaliser et nécessite un outillage important.

Il est beaucoup plus simple et rapide de faire courir ces conducteurs électriques dans des profilés appelés goulottes, moulures ou plinthes rapportés extérieurement en applique sur des supports plans, tels les murs, cloisons, parois et plafonds.

Ces profilés sont des corps linéaires creux, formés généralement d'une embase et d'un couvercle, dans lesquels circulent les conducteurs électriques, téléphoniques, informatiques et autres. Ils permettent le raccordement dans de bonnes conditions de ces conducteurs avec des éléments techniques tels que, par exemple, des prises de courant, de téléphone, de télévision ou celles d'un réseau informatique. Ces profilés ont pour fonction d'assurer la protection des conducteurs entre les différents éléments techniques.

Lorsqu'une telle goulotte doit être rapportée de façon continue sur deux parois faisant un angle entre elles, il est nécessaire d'utiliser une pièce d'angle afin de masquer la discontinuité existant entre les deux tronçons en regard de la goulotte. La pièce d'angle permet ainsi de raccorder esthétiquement les extrémités des deux tronçons, tout en assurant au niveau de l'angle la protection des conducteurs contre les agressions extérieures.

La présente invention se rapporte à un dispositif de pièce d'angle permettant le raccordement angulaire de deux tronçons de goulotte, plinthe, ou analogue.

L'angle existant entre les deux parois, lorsqu'il s'agit de deux murs ou cloisons, est normalement un angle rentrant ou saillant de 90°. Cependant, on constate souvent que la valeur de l'angle varie de quelques degrés par rapport à cette valeur théorique, en raison d'une certaine tolérance de fabrication lors de la construction. Ces imperfections de réalisation sont encore plus fréquentes dans les bâtiments anciens.

Les pièces d'angle classiques étant prévues pour un angle droit parfait, le raccordement angulaire des tronçons de goulotte pose de nombreux problèmes.

Au moment du montage, l'installateur peut se trouver dans l'impossibilité de raccorder les deux tronçons avec une pièce d'angle standard, si celle-ci présente une rigidité trop grande. S'il réussit tout de même, l'exposition de la pièce d'angle à une contrainte permanente de flexion provoque à la longue un risque d'endommagement voire même de rupture.

De plus, lorsque l'on utilise une pièce d'angle fabriquée pour un angle droit parfait, le défaut d'équerrage des parois provoque, lorsque la pièce est en place, l'apparition d'interstices entre les extrémités des tronçons de goulotte et de la pièce d'angle. Ces interstices, plus ou moins importants suivant l'écart de l'angle par rapport à la valeur normale, nuisent à l'esthétique et à la protection des conducteurs contre les chocs et les agressions du milieu extérieur. Par ailleurs, il existe un risque de pénétration de matières ou d'objets de faible épaisseur ou de petite section jusqu'aux conducteurs sous tension. Une telle pénétration peut provoquer une oxydation des conducteurs, des courts-circuits ou des connexions indésirables et autres inconvénients. Ce risque de pénétration se révèle dangereux pour les personnes comme pour le matériel.

La pièce d'angle doit également permettre de réaliser une jonction esthétique avec les deux tronçons à raccorder afin de s'intégrer visuellement à la goulotte. Or, l'utilisation d'une pièce d'angle classique entraîne l'apparition d'interstices inesthétiques au niveau de la jonction entre les différents éléments, empêchant d'atteindre cet objectif.

Le but général de l'invention est de fournir une pièce d'angle, permettant le raccordement angulaire de deux tronçons successifs de goulotte, pouvant s'adapter facilement et sans moyens supplémentaires à un léger écart angulaire par rapport à l'angle droit théorique.

Pour résoudre ce problème technique, diverses pièces d'angle ont été proposées. On connaît par exemple des systèmes d'adaptation à la valeur réelle de l'angle à charnière et/ou à prédécoupes.

On connaît ainsi, par exemple, le dispositif décrit dans le brevet TELEMECANIQUE ELECTRIQUE n° GB 2031232. Il s'agit d'un cache de raccordement angulaire constitué de deux parois verticales articulées et d'une paroi horizontale, perpendiculaire aux parois verticales. Une portion déformable de plus faible épaisseur relie les deux parois verticales et permet de les articuler pour s'adapter à la valeur de l'angle en jouant le rôle d'une charnière. L'adaptation de la partie supérieure de la pièce se fait par découpage d'un secteur angulaire dans une portion de la paroi horizontale de plus faible épaisseur. Des moyens de fixation, soudure ou barre de liaison et tenons, rigidifient la paroi horizontale et maintiennent l'un contre l'autre les deux bords après le découpage.

Cette pièce d'angle comporte de nombreuses zones de faible épaisseur ce qui fragilise la pièce et rend nécessaire des moyens supplémentaires de rigidification. De plus, l'adaptation de la pièce à l'angle réel est assez compliquée pour l'installateur. En effet, il doit d'abord mesurer la valeur de l'angle, puis découper le secteur angulaire correspondant. Il doit ensuite mettre en place les moyens de rigidification. Cette opération peut donc, en l'absence de tout repère, être difficile à réaliser pour un utilisateur inexpérimenté. En cas d'erreur, le cache peut être rendu inutilisable s'il ne s'adapte plus à l'angle ou au système de fixation barre/tenons.

La demande FR 2731496 au nom de PLANET WATTHOM décrit un dispositif de raccordement angulaire constitué de deux éléments : un connecteur reliant les corps des deux tronçons de goulotte et une coiffe recouvrant le connecteur et les extrémités des couvercles de la goulotte.

Le connecteur est formé de deux embouts verticaux articulés par une charnière résultant d'un amincissement de la matière.

La coiffe comporte deux montants, constitués de lamelles incurvées regroupées en peigne, recouverts et assemblés par une peau souple et élastique en matière plastique non compatible chimiquement avec celle des montants. La peau permet, grâce à son élasticité, une certaine variation angulaire lors du montage.

Ce dispositif faisant appel à des éléments rigides internes et des éléments externes souples présente une structure assez compliquée. En outre, la fabrication d'une pièce par surmoulage, devant mettre en oeuvre simultanément deux matières plastiques différentes, est coûteuse et source de rebut au niveau de la fabrication, ainsi que de dégradation des fonctions en cas de vieillissement du matériau ou de manipulations non précautionneuses de cet élément au moment du montage.

Par la demande EP n° 0734107 au nom de PLANET WATTOHM, on connaît également une pièce d'angle en trois parties : une paroi verticale de raccordement comportant à chacune de ses extrémités des moyens de dégagement dans lesquels s'engagent les extrémités des éléments à raccorder, ainsi qu'une partie horizontale supérieure et une partie horizontale inférieure de même structure.

Bien qu'aucune souplesse ne soit conférée à la pièce de raccordement dans les deux directions des tronçons de la plinthe, les moyens de dégagement, conformés en cavités trapézoïdales, rendent possible un débattement angulaire permettant à la pièce d'angle de s'adapter à l'orientation des tronçons.

Les parties horizontales comportent un système de jupes permettant un engagement des extrémités supérieure et inférieure de la paroi latérale et assurant une certaine protection sur le pourtour de la pièce de raccordement. Les parties horizontales présentent par ailleurs des lignes prédécoupées au niveau du retour d'angle afin de pouvoir s'adapter à la valeur de l'angle des parois par brisure et enlèvement de zones de bordure en forme de coin.

Ce dispositif multiplie les doublements d'éléments, soit pour constituer les moyens de dégagement, soit pour constituer les jupes. Il nécessite un matériel de fabrication et notamment de moulage très coûteux en raison du nombre et de la complexité des formes et des volumes à réaliser. Le grand nombre de pièces de faible épaisseur peut, en outre, augmenter le risque de brisure lors des manipulations pour le montage ou à la suite d'un vieillissement du matériau utilisé. Les parois des tronçons étant maintenues par pincement dans les cavités de dégagement, il existe un risque qu'à la longue ce pincement se relâche et que des interstices se créent ou que les parois ressortent en cas de chocs ou de mauvaises manipulations.

Une autre solution est divulguée dans la demande FR 2768571 au nom de PLANET WATTOHM. Le dispositif de raccordement décrit comprend deux tronçons, de forme générale en U, perpendiculaires entre eux et reliés par un moyen de charnière. Une échancrure est ménagée dans chacune des parois latérales inférieure et supérieure au voisinage de la charnière. Ces échancrures sont comblées par un élément déformable et élastique, fixé latéralement sur les bords de ces échancrures, qui assure par sa déformation et au moyen de la charnière une adaptation de la pièce à la valeur réelle de l'angle.

La pièce décrite dans cette demande est une pièce composite, comportant une partie en matière plastique semi-rigide et une partie élastique. Sa fabrication nécessite l'utilisation d'un procédé complexe par injection bi-matière, encore mal maîtrisé. Son prix de revient est donc relativement important.

Sur le plan esthétique, ce dispositif présente un autre désavantage : lorsque l'on comprime la partie élastique de la pièce pour réaliser son adaptation angulaire, il se forme un bourrelet disgracieux de matière élastique dépassant de l'ensemble. La zone de matière élastique constitue, en outre, un site privilégié d'accumulation de poussière.

La présente invention apporte une solution satisfaisante au problème technique en fournissant une pièce d'angle pouvant être adaptée à une gamme continue de variations angulaires autour de l'angle droit théorique correspondant aux angles les plus couramment rencontrés. La pièce d'angle de l'invention assure une protection efficace des conducteurs et une jonction esthétique s'intégrant visuellement à la goulotte à raccorder. Elle peut être mise en place très facilement, sans moyens supplémentaires ni opérations délicates pour l'installateur. Sa structure étant très simple, elle est fabriquée de façon très rapide et économique, par exemple par un procédé classique de moulage par injection.

L'invention se rapporte plus particulièrement à une pièce d'angle constituée d'une bande verticale coudée selon un angle sensiblement droit et de deux ailes latérales sensiblement horizontales.

Le bord des ailes latérales est découpé selon un angle de forme complémentaire à celui des parois sur lesquelles sont fixés les tronçons de goulotte, afin de pouvoir plaquer la pièce d'angle contre les parois. La valeur de l'angle du bord des ailes latérales correspond à l'une des valeurs limites, différente de 90°, de l'angle des parois auquel la pièce d'angle peut s'adapter.

La face interne de chaque aile latérale présente deux rangées de picots désalignées par rapport aux axes perpendiculaires de la bande verticale de la pièce. Ces rangées peuvent, par exemple, être parallèles aux bords angulaires de l'aile.

L'adaptation à un angle d'une valeur différente de celle du bord angulaire est possible grâce au désalignement de ces rangées de picots insérés avec jeu dans les rainures des tronçons de goulotte à raccorder et grâce à une certaine flexibilité naturelle du profilé et de la pièce d'angle.

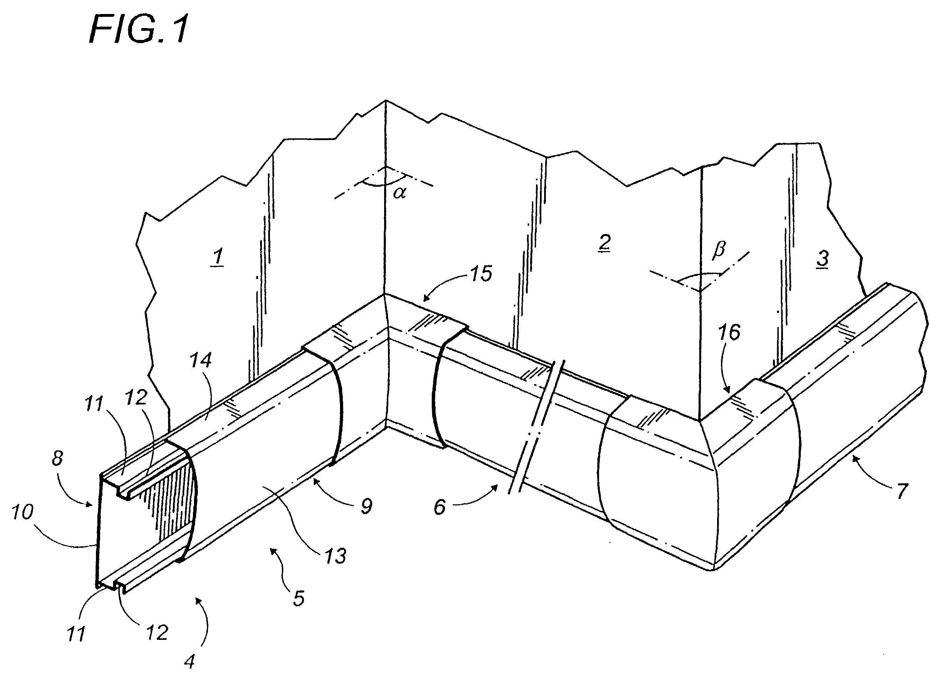

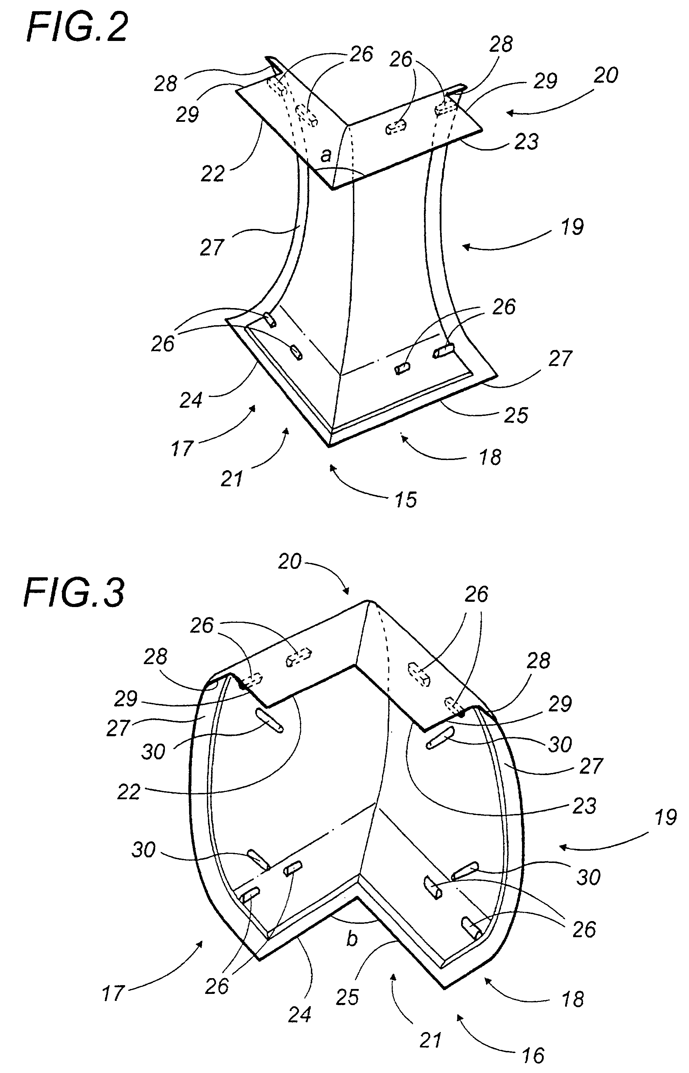

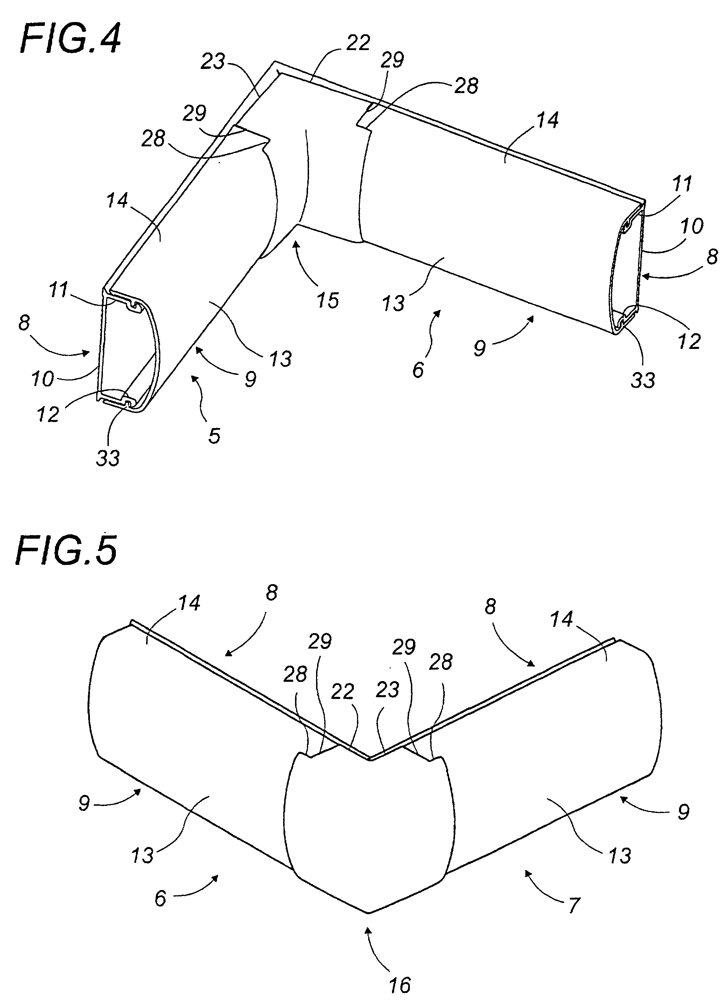

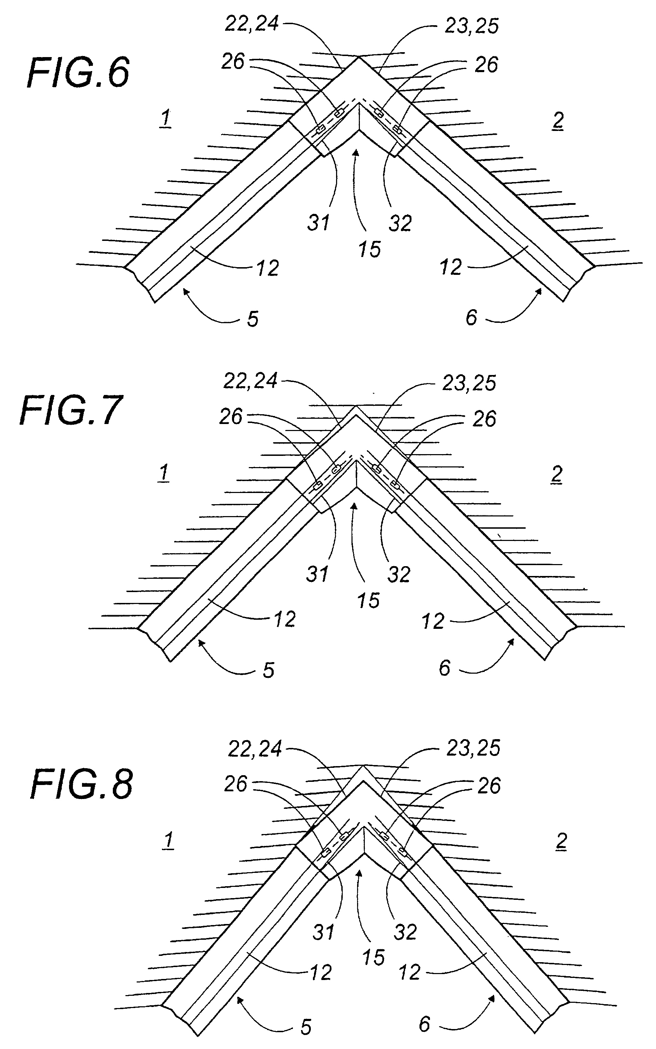

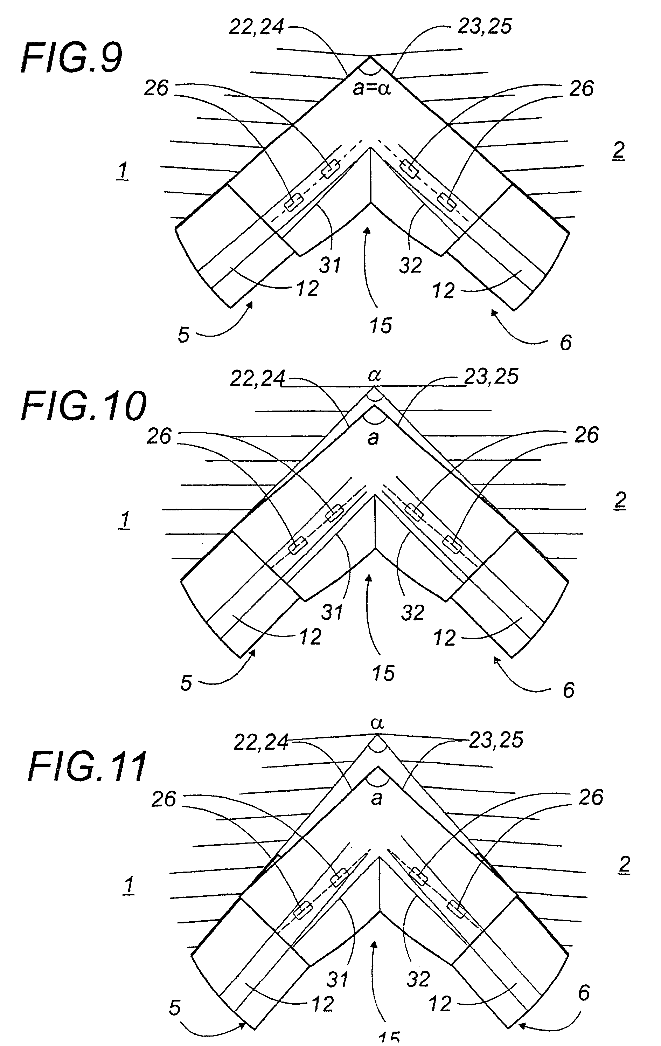

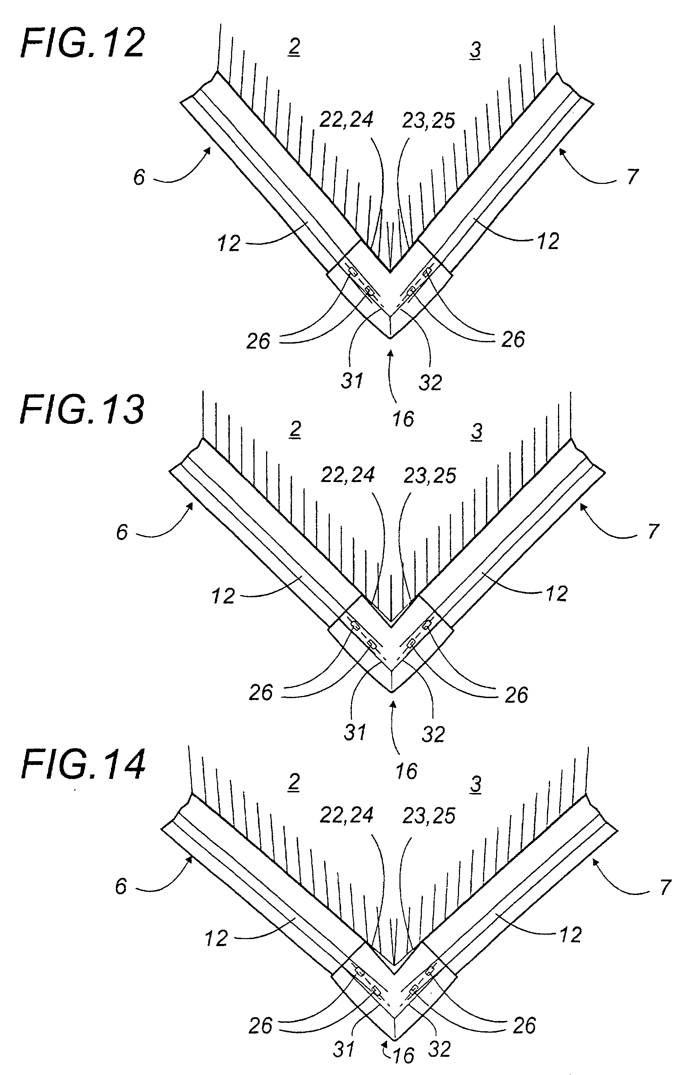

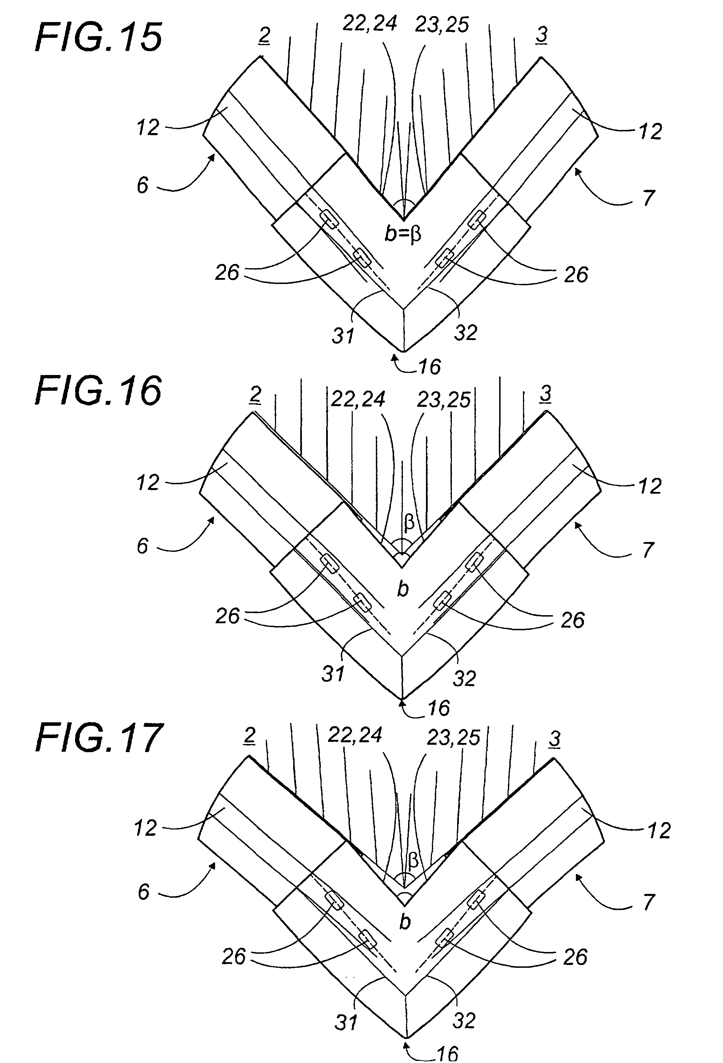

D'autres caractéristiques et avantages de l'invention apparaîtront à la lecture de la description détaillée qui va suivre, description faite en référence aux dessins annexés, dans lesquels :
. la figure 1 est une vue en perspective d'une goulotte fixée sur trois parois successives formant un angle rentrant puis un angle sortant, les trois tronçons de goulotte étant raccordés par une pièce d'angle rentrant puis par une pièce d'angle sortant selon deux modes de réalisation de la présente invention ;
. la figure 2 est une vue en perspective de l'arrière d'une pièce d'angle adaptée à un angle rentrant selon un premier mode de réalisation de la présente invention ;
. la figure 3 est une vue en perspective de l'arrière d'une pièce d'angle adaptée à un angle sortant selon un deuxième mode de réalisation de la présente invention ;
. la figure 4 est une vue en perspective d'une pièce d'angle, adaptée à un angle rentrant selon le premier mode de réalisation, réalisant la jonction entre deux tronçons de goulotte destinés à être disposés en applique contre un plafond ;
. la figure 5 est une vue en perspective d'une pièce d'angle, adaptée à un angle sortant selon le deuxième mode de réalisation, réalisant la jonction entre deux tronçons de goulotte destinés à être disposés en applique contre un plafond ;
. la figure 6 est une vue schématique de dessus illustrant le fonctionnement du premier mode de réalisation de la pièce d'angle avec un angle rentrant supérieur à 90° ;
. la figure 7 est une vue schématique de dessus illustrant le fonctionnement du premier mode de réalisation de la pièce d'angle avec un angle rentrant égal à 90° ;
. la figure 8 est une vue schématique de dessus illustrant le fonctionnement du premier mode de réalisation de la pièce d'angle avec un angle rentrant inférieur à 90° ;
. la figure 9 est un agrandissement d'un détail de la figure 6 illustrant la pièce d'angle de façon plus détaillée ;
. la figure 10 est un agrandissement d'un détail de la figure 7 illustrant la pièce d'angle de façon plus détaillée ;
. la figure 11 est un agrandissement d'un détail de la figure 8 illustrant la pièce d'angle de façon plus détaillée ;
. la figure 12 est une vue schématique de dessus illustrant le fonctionnement du deuxième mode de réalisation de la pièce d'angle avec un angle sortant inférieur à 90° ;
. la figure 13 est une vue schématique de dessus illustrant le fonctionnement du deuxième mode de réalisation de la pièce d'angle avec un angle sortant égal à 90° ;
. la figure 14 est une vue schématique de dessus illustrant le fonctionnement du deuxième mode de réalisation de la pièce d'angle avec un angle sortant supérieur à 90° ;
. la figure 15 est un agrandissement d'un détail de la figure 12 illustrant la pièce d'angle de façon plus détaillée ;
. la figure 16 est un agrandissement d'un détail de la figure 13 illustrant la pièce d'angle de façon plus détaillée ;
. la figure 17 est un agrandissement d'un détail de la figure 14 illustrant la pièce d'angle de façon plus détaillée.

La pièce d'angle selon la présente invention, permettant le raccordement angulaire de deux tronçons de goulotte, va maintenant être décrite de façon détaillée en référence aux figures 1 à 17. Les éléments équivalents représentés dans les différentes figures porteront les mêmes références numériques.

On a représenté à la figure 1 une succession de trois surfaces planes 1, 2 et 3 pouvant être les murs ou cloisons d'un bâtiment ou d'une habitation. Ces parois forment entre elles un angle rentrant α puis un angle sortant β.

Une goulotte 4 est fixée en saillie sur ces parois. La goulotte 4 est constituée de trois tronçons de goulotte 5, 6 et 7 rapportés respectivement sur les parois 1, 2 et 3. Ces tronçons sont sectionnés très facilement à la demande, en fonction de la longueur de chaque paroi.

Chaque tronçon de goulotte comprend une embase 8 et un couvercle 9. L'embase 8, de section transversale en U, comporte un fond plat 10 fixé contre la surface de la paroi et deux ailes longitudinales 11 parallèles et symétriques, sensiblement perpendiculaires au fond plat 10. L'extrémité supérieure de chacune des ailes 11 présente un renfoncement formant une rainure longitudinale 12.

Le couvercle 9 de la goulotte possède également une section transversale de forme générale en U. Il comporte une face supérieure 13 et deux ailes longitudinales 14 parallèles, sensiblement perpendiculaires à la face supérieure 13. Le couvercle 9 permet de refermer le corps creux de la goulotte afin de protéger les conducteurs logés à l'intérieur de celle-ci. Il est également la partie visible de la goulotte et doit donc présenter une forme esthétique permettant l'intégration visuelle de la goulotte. Pour cette raison, le couvercle 9 peut présenter des formes de surface extérieure relativement variées, par exemple une forme bombée avec des angles arrondis comme il est représenté à la figure 1. Cependant, cette forme peut être différente sans influer pour autant sur la teneur de la présente invention.

Une nervure 33, représentée à la figure 4, s'étend longitudinalement sur la face intérieure de chacune des ailes 14 du couvercle 9. Lorsque le couvercle 9 de la goulotte se met en place, cette nervure 33 vient se loger dans la rainure 12 de l'embase et coopère avec celle-ci pour maintenir le couvercle 9 sur l'embase 8.

Les deux premiers tronçons 5 et 6 de la goulotte 4 sont raccordés au niveau de l'angle rentrant a formé par l'intersection des parois 1 et 2, par une pièce d'angle 15 qui constitue un premier mode de réalisation de la pièce d'angle selon la présente invention adapté aux angles rentrants. Les bords de la pièce d'angle 15 portent sur les extrémités des tronçons 5 et 6 de goulotte afin de les recouvrir de manière esthétique et d'assurer l'étanchéité aux matières solides et la protection des conducteurs. La pièce d'angle 15 est représentée de façon plus détaillée à la figure 2.

De la même façon, les deux derniers tronçons 6 et 7 de la goulotte 4 sont raccordés au niveau de l'angle sortant β formé par l'intersection des parois 2 et 3, par une pièce d'angle 16 constituant un deuxième mode de réalisation de la pièce d'angle selon la présente invention adapté aux angles sortants. Les bords de la pièce d'angle 16 portent également sur les extrémités des tronçons 6 et 7 de la goulotte 4. La pièce d'angle 16 est elle représentée à la figure 3.

La pièce d'angle 15 est constituée de deux tronçons 17 et 18 sensiblement perpendiculaires, à profil globalement en forme de U. Ces deux tronçons 17 et 18 sont réalisés d'une seule pièce constituée d'une bande 19 verticale coudée sensiblement à 90°, correspondant à la base du U, et de deux ailes latérales 20 et 21 sensiblement horizontales correspondant aux branches parallèles du U.

Chacune des ailes latérales 20 et 21 présente des bords extérieurs 22, 23 et 24, 25 coupés selon un angle sortant « a », devant s'adapter à l'angle a formé par les parois 1 et 2. L'angle « a » est supérieur à 90°. Sa valeur correspond à la valeur limite maximale de l'angle α, supérieure à 90°, à laquelle la pièce d'angle peut s'adapter. Cette valeur d'angle est choisie en fonction de la gamme des écarts courants d'angle entre les parois adjacentes, de façon à s'adapter aux angles les plus fréquemment rencontrés.

La face interne de chaque aile latérale 20 et 21 présente deux rangées de deux picots 26 par exemple de section rectangulaire. Ces rangées ne sont pas parallèles aux axes perpendiculaires 31 et 32 de la bande verticale de la pièce et ne forment pas un angle droit entre elles. Ce désalignement permet une adaptation aux variations de la valeur de l'angle entre les parois supportant la goulotte. Son fonctionnement sera décrit en détail par la suite en référence aux figures 6 à 17.

Un désalignement particulier intéressant est obtenu par exemple lorsque les rangées de picots sont sensiblement parallèles aux bords angulaires 22, 23 ou 24, 25 de l'aile latérale sur laquelle elles se trouvent. Cette configuration particulière a été représentée sur les figures 6 à 17, la portée de l'invention n'étant en aucun cas limitée à cette valeur particulière d'alignement.

Les picots 26 permettent de maintenir la pièce d'angle 15 sur la goulotte 4. En effet, lors du montage, le couvercle 9 de chaque extrémité de tronçon à raccorder est coupé plus court que l'embase 8, de façon à laisser libre une partie de l'embase 8 pour la fixation de la pièce d'angle 15. La pose de la pièce d'angle est très rapide et particulièrement aisée par rapport à une pièce d'angle classique. Il suffit en effet d'insérer à force la pièce d'angle 15 par l'avant sur la partie libre de l'embase, en profitant pour cela de la flexibilité des ailes longitudinales 11 de la goulotte et de la petite taille des picots 26. On peut ainsi encliqueter directement la pièce d'angle sur l'embase. Lorsque l'on rapporte la pièce d'angle 15 sur la partie libre de l'embase, les picots 26 pénètrent dans la rainure 12 de l'embase coopérant avec celle-ci pour assurer le maintien de la pièce d'angle. Il n'est donc plus nécessaire de faire coulisser la pièce d'angle ou de la rapporter sur les tronçons de goulotte avant leur fixation contre les parois, ce qui simplifie considérablement la tâche de l'installateur.

La pièce d'angle 15 comporte à sa périphérie un prolongement 27 de plus faible épaisseur qui borde le pourtour de la pièce et s'étend dans le prolongement de sa surface extérieure. Lorsque la pièce d'angle est positionnée sur la goulotte, ce prolongement 27 définit, entre la pièce d'angle et la partie de l'embase 8 qui la supporte, un intervalle dans lequel peut s'engager l'extrémité du couvercle 9 du tronçon 5 ou 6 de goulotte. La pièce d'angle réalise, par son prolongement 27 portant sur l'extrémité des couvercles 9, un recouvrement de l'extrémité des tronçons de goulotte à raccorder. Elle assure ainsi un raccordement esthétique des tronçons et une protection efficace des conducteurs contre l'introduction de matières.

Sur la pièce d'angle représentée à la figure 2, le prolongement 27 ne borde pas la pièce sur la totalité de sa périphérie. Il est absent le long des bords de l'aile latérale supérieure 20 à partir d'un décrochement 28. Lorsque la pièce d'angle est positionnée sur la goulotte, le prolongement 27 porte sur l'extrémité du couvercle 9 sur toute la périphérie de celle-ci sauf au niveau de cette découpe, où l'extrémité du couvercle 9 arrive en butée contre le bord 29 de la pièce d'angle.

Cette découpe évite un doublement de matière dans les zones invisibles pour l'utilisateur où la réalisation d'un recouvrement esthétique est inutile. En effet, lorsque la pièce d'angle doit être adaptée à une plinthe ou à une moulure, l'une de ses faces, en contact soit avec le sol soit avec le plafond, demeure cachée aux yeux de l'utilisateur. Le mode de réalisation illustré à la figure 2 est adapté à un raccordement de ce type. Elle peut être tournée de 180° pour s'adapter suivant le cas à une plinthe ou à une moulure. Elle assure ainsi la continuité plane entre le chant de la goulotte ou de la plinthe et la face adjacente supérieure ou inférieure de la pièce d'angle.

Cette découpe présente un avantage supplémentaire. Grâce à cette découpe, la face à appliquer contre une paroi de plafond ou de sol ne présente pas de surépaisseur due au doublement de matière au niveau de la pièce d'angle. La pièce d'angle affleurant au niveau du couvercle des tronçons de goulotte, l'ensemble pièce d'angle/tronçons de goulotte peut être plaqué sans jeu sur toute sa longueur contre la paroi de sol ou de plafond. On évite ainsi la formation d'interstices inesthétiques et laissant entrer la poussière et les matières solides de faible section.

Le recouvrement des tronçons de goulotte par la bordure 27, avant et au niveau de cette découpe, est illustré à la figure 4, où la pièce d'angle 15 a été représentée montée sur deux tronçons 5 et 6 de goulotte aptes à être rapportés en applique sur un plafond.

On peut envisager sans difficulté un autre mode de réalisation dans lequel le prolongement 27 borderait la totalité de la pièce d'angle et recouvrirait l'extrémité des couvercles sur la totalité de leur pourtour. Un tel mode de réalisation est adapté dans le cas d'une goulotte présentant toutes ses faces au regard de l'utilisateur.

La face externe de la pièce d'angle présente une forme adaptée à celle des tronçons de goulotte à raccorder, afin de réaliser une continuité visuelle esthétique avec ceux-ci. Cette face peut par exemple posséder une forme bombée comme illustrée par les différentes figures.

Les moyens essentiels de la variante destinée à un angle sortant délimité par les parois jointives 2 et 3, vont maintenant être décrits succinctement en référence à la figure 3. Les éléments équivalents remplissant les mêmes fonctions dans les deux variantes porteront les mêmes numéros de référence.

La pièce d'angle 16 est également constituée de deux tronçons 17 et 18 perpendiculaires, à profil globalement en forme de U. Ces deux tronçons 17 et 18 sont réalisés d'une seule pièce constituée d'une bande 19 verticale enveloppante, coudée sensiblement à 90°, et de deux ailes latérales 20 et 21 sensiblement horizontales.

La face externe de la pièce d'angle présente par exemple une forme esthétique bombée adaptée à celle des tronçons de goulotte à raccorder.

Les bords extérieurs 22, 23 et 24, 25 des ailes latérales 20 et 21 sont découpés selon un angle rentrant « b », devant s'adapter à l'angle β formé par les parois 2 et 3. L'angle « b », inférieur à 90°, correspond à la valeur limite minimale de l'angle β à laquelle la pièce d'angle 16 peut s'adapter. Cette valeur d'angle est choisie en fonction des angles les plus fréquemment rencontrés.

La face interne de chaque aile latérale 20 et 21 présente deux rangées de deux picots 26 par exemple rectangulaires, permettant de maintenir la pièce d'angle 16 sur la goulotte 4 lorsqu'ils sont insérés dans la rainure 12 de l'embase 8 par clipsage frontal direct de la pièce d'angle sur une partie libre de l'embase. Ces rangées présentent un désalignement par rapport aux axes perpendiculaires 31 et 32 de la bande verticale de la pièce, permettant l'adaptation de la pièce à des angles β différents de 90°.

Un désalignement intéressant, mais non limitatif, a été représenté à la figure 3 où les rangées de picots sont sensiblement parallèles aux bords angulaires 22, 23 et 24, 25 de l'aile latérale sur laquelle elles se trouvent et forment donc entre elles un angle « b ».

La pièce d'angle 16, selon le mode de réalisation représenté à la figure 3, comporte en plus quatre picots de guidage 30 sur la face interne de la bande verticale 19. Chacun de ces picots de guidage 30 se situe près de l'une des rangées de picots 26, environ à la verticale de l'intervalle séparant les deux picots de chaque rangée.

Lorsque la pièce d'angle 16 est rapportée sur l'embase 8, les picots 30 se trouvent de l'autre côté de la rainure 12 par rapport au picots 26. Ils réalisent ainsi un meilleur guidage et un maintien plus important de la pièce d'angle 16 sur la goulotte. Ces picots de guidage 30 peuvent évidemment être omis ou ajoutés à la variante précédente sans modifier la portée de l'invention.

La pièce d'angle 16 comporte à sa périphérie un prolongement 27 de plus faible épaisseur bordant le pourtour de la pièce dans le prolongement de sa surface extérieure, permettant de réaliser un recouvrement de l'extrémité du couvercle des tronçons de goulotte à raccorder.

La pièce d'angle 16 représentée à la figure 3, comporte comme dans la variante précédente une découpe de ce prolongement 27 à partir d'un décrochement 28, le mode de réalisation illustré étant adapté à une plinthe ou à une moulure. Le caractère particulièrement avantageux de cette découpe est illustré à la figure 5, où la pièce d'angle 16 a été représentée montée sur deux tronçons 6 et 7 de goulotte aptes à être rapportés en applique sur un plafond.

Le prolongement 27 peut évidemment être complet dans le cas d'une goulotte.

La capacité d'adaptation angulaire des pièces d'angle 15 et 16 va maintenant être expliquée de façon plus détaillée en faisant référence aux figures 6 à 11 pour la variante de la pièce d'angle 15 correspondant à un angle rentrant et aux figures 12 à 17 pour la variante de la pièce d'angle 16 correspondant à un angle sortant. Dans ces représentations graphiques, les situations et les écarts ont été exagérés pour permettre de mieux visualiser le fonctionnement du dispositif selon l'invention.

Dans ces figures, l'axe de chaque rangée de picots 26 est matérialisé par un trait mixte. Les axes directeurs de la pièce d'angle, c'est-à-dire les axes perpendiculaires générateurs de la bande coudée 19, sont eux représentés par les traits fins 31 et 32. Les axes 31 et 32 forment dans les différentes figures un angle droit parfait à leur intersection.

Les figures 6 et 9 illustrent un cas limite d'utilisation de la pièce d'angle 15. La valeur de l'angle a, formé par les deux parois jointives 1 et 2, est supérieure à 90°. Elle correspond exactement à la valeur de l'angle « a » formé par les bords extérieurs 22, 23 et 24, 25. La pièce d'angle s'adapte donc parfaitement à l'angle réel formé par les parois et est de ce fait complètement en contact avec celles-ci. Cette valeur de l'angle α correspond à la valeur maximale d'angle à laquelle la pièce d'angle 15 peut s'adapter.

Grâce au désalignement particulier choisi, les rangées de picots 26 étant parallèles aux bords 22, 24 et 23, 25, les picots 26 sont positionnés au centre de la rainure 12. Le raccordement des tronçons de goulotte est parfait et ne présente aucune difficulté, ce qui serait très différent avec une goulotte classique.

Les figures 7 et 10 illustrent le cas de l'utilisation de la pièce d'angle 15 pour un angle α intermédiaire correspondant à un angle droit parfait.

L'adaptation à un angle α d'une valeur inférieure à celle de l'angle formé par les bords 22, 23 et 24, 25 est rendue possible par la coopération de plusieurs moyens : grâce au désalignement des rangées de picots 26, au jeu existant autour des picots dans les rainures 12 des tronçons de goulotte et grâce à une certaine flexibilité naturelle des ailes longitudinales 11 du profilé et de la pièce d'angle.

Pour s'adapter à cet angle α plus petit, la pièce d'angle s'avance un peu et s'éloigne légèrement des parois 1 et 2, ce qui permet grâce à la flexibilité naturelle des ailes longitudinales 11 et de la pièce d'angle, de raccorder sans difficulté les deux tronçons de goulotte. Le jeu existant autour des picots 26 dans la rainure 12 leur permet de pénétrer librement dans la rainure, et ce malgré la différence de direction entre l'axe de la rangée de picots 26 et celui de la goulotte 12 due au désalignement des picots.

Les figures 8 et 11 illustrent l'autre cas limite d'utilisation de la pièce d'angle 15. La valeur de l'angle a est inférieure à 90°. La pièce d'angle est donc encore un peu plus éloignée des parois 1 et 2 délimitant l'angle α. Dans ce cas limite, les picots 26 sont en butée contre les parois de la goulotte 12. Cet angle α correspond à l'angle minimal auquel la pièce d'angle 15 puisse s'adapter.

Le principe est identique pour une pièce d'angle 16 prévue pour un angle sortant. Il est illustré par les figures 12 à 17.

Les figures 12 et 15 illustrent le premier cas limite d'utilisation correspondant à l'angle le plus petit auquel la pièce d'angle 15 puisse s'adapter. L'angle β entre les parois 2 et 3 est inférieur à 90°. Il correspond exactement à l'angle « b » formé par les bords extérieurs 22, 23 et 24, 25. La pièce d'angle s'y adapte donc parfaitement.

Grâce au désalignement particulier choisi, les rangées de picots 26 étant parallèles aux bords 22, 24 et 23, 25, les picots 26 sont positionnés au centre de la rainure 12. Ainsi, le raccordement des tronçons de goulotte est parfait et ne présente aucune difficulté.

Les figures 13 et 16 illustrent le cas de l'utilisation de la pièce d'angle 16 pour un angle β intermédiaire correspondant à un angle droit parfait.

Pour s'adapter à cet angle β plus grand, la pièce d'angle s'avance un peu et s'éloigne légèrement des parois 2 et 3, ce qui permet grâce à la flexibilité naturelle des ailes longitudinales du profilé et de la pièce de raccorder sans difficulté les deux tronçons de goulotte. Le jeu existant autour des picots 26 dans la rainure 12 leur permet de pénétrer librement dans la rainure, et ce malgré la différence de direction entre l'axe de la rangée de picots 26 et celui de la goulotte 12 due au désalignement des picots.

Les figures 14 et 17 illustrent le second cas limite d'utilisation correspondant à l'angle maximal auquel la pièce d'angle 16 puisse s'adapter. L'angle β est cette fois supérieur à 90°. La pièce d'angle est donc encore un peu plus éloignée des parois 2 et 3. Dans ce cas limite, les picots 26 arrivent en butée contre les parois de la goulotte 12.

## Revendications

1. Pièce d'angle pour le raccordement angulaire entre les extrémités en regard de deux tronçons successifs (5, 6, 7) rapportés sur deux parois jointives (1, 2, 3) formant soit un angle rentrant (α), soit un angle sortant (β) entre elles, les deux tronçons provenant d'une moulure, d'une plinthe, d'une goulotte ou analogue (4) utilisée pour la distribution électrique, téléphonique et/ou informatique dans une pièce, un bureau ou un local, pièce d'angle du type comportant une embase à rapporter en applique contre les parois, formée d'une bande globalement verticale (19) coudée selon un angle sensiblement droit et deux ailes latérales coudées (20, 21) sensiblement horizontales, **caractérisée en ce que** les bords (22, 23) et (24, 25) des ailes latérales (20, 21) sont disposés selon un angle « a » ou « b » de forme complémentaire à celui de (α) ou (β) des parois jointives (1, 2, 3) et dont la valeur correspond à une valeur prédéterminée liée à l'une des valeurs limites de l'angle (α) ou (β) des parois dans lequel la pièce d'angle doit s'adapter, et **en ce que** la face interne de chaque aile latérale (20, 21) présente des moyens d'adaptation angulaire en saillie (26), désalignés par rapport aux axes généraux (31, 32) de la bande verticale (19) de la pièce d'angle, permettant de s'adapter aux différentes valeurs de l'angle (α, β) entre les parois jointives (1, 2, 3).

2. Pièce d'angle selon la revendication 1 **caractérisée en ce que** les axes d'alignement des moyens d'adaptation (26) permettant une adaptation aux différentes valeurs de l'angle (α) ou (β), sont parallèles aux bords angulaires (22, 23 et 24, 25) des ailes latérales (20, 21).

3. Pièce d'angle selon la revendication 1 ou 2 **caractérisée en ce que** les extrémités des couvercles (9) des deux tronçons successifs (5, 6, 7) de goulotte ou analogue se terminent avant l'extrémité de chaque tronçon (5, 6, 7) laissant un espace ouvert ou une partie de l'embase (8) des tronçons libre permettant la mise en place des moyens d'adaptation (26) et l'immobilisation de la pièce d'angle sur ces tronçons.

4. Pièce d'angle selon la revendication 3 **caractérisée en ce que** la mise en place et l'immobilisation de la pièce d'angle (15, 16) se fait par insertion frontale directe de la pièce d'angle sur la partie libre de l'embase (8) de l'extrémité des tronçons à raccorder.

5. Pièce d'angle selon l'une quelconque des revendications précédentes **caractérisée en ce que** les moyens d'adaptation (26) coopèrent avec des rainures longitudinales (12), situées sur les tronçons (5, 6, 7) à raccorder, pour maintenir la pièce d'angle sur ces tronçons.

6. Pièce d'angle selon la revendication 5 **caractérisée en ce qu'**il existe un jeu autour des moyens d'adaptation (26) lorsqu'ils sont positionnés dans les rainures longitudinales (12) des tronçons.

7. Pièce d'angle selon l'une quelconque des revendications précédentes **caractérisée en ce que** les moyens d'adaptation sont des rangées de picots (26).

8. Pièce d'angle selon la revendication 7 **caractérisée en ce que** chaque rangée de picots est constituée de deux picots rectangulaires (26).

9. Pièce d'angle selon la revendication 1 **caractérisée en ce que** l'angle (a) étant rentrant les bords (22, 23 et 24, 25) des ailes latérales (20, 21) sont découpés selon un angle (a) dont la valeur correspond à la valeur maximale de l'angle (α) entre les parois dans lequel la pièce d'angle (15) vient s'adapter.

10. Pièce d'angle selon la revendication 1 **caractérisée en ce que** l'angle (β) étant sortant la pièce d'angle (16) est coudée et enveloppante et **en ce que** les bords (22, 23 et 24, 25) des ailes latérales (20, 21) sont découpés selon un angle (b) dont la valeur correspond à la valeur minimale de l'angle (β) des parois dans lequel la pièce d'angle (16) vient s'adapter.

11. Pièce d'angle selon l'une quelconque des revendications précédentes **caractérisée en ce qu'**elle comporte à sa périphérie un prolongement (27) de plus faible épaisseur, bordant la pièce, sur une partie au moins de son pourtour, dans le prolongement de sa surface extérieure et permettant de réaliser un recouvrement de l'extrémité des tronçons de goulotte à raccorder.

12. Pièce d'angle selon la revendication 11 **caractérisée en ce que** le prolongement (27) ne borde pas la pièce d'angle (15, 16) sur la totalité de son pourtour, évitant ainsi la formation, au niveau d'une des faces latérales de la pièce d'angle, d'une surépaisseur par rapport aux couvercles (9) des tronçons de goulotte à raccorder et permettant de plaquer sans jeu les tronçons de goulotte et la pièce d'angle contre une paroi de plafond ou de sol.

13. Pièce d'angle selon l'une quelconque des revendications précédentes **caractérisée en ce qu'**elle comporte en outre des picots de guidage (30) situés sur la face interne de la bande globalement verticale (19) de la pièce d'angle.

## Patentansprüche

1. Winkelstück für die Winkelverbindung zwischen den einander gegenüber liegenden Enden von zwei aufeinander folgenden Teilstücken (5, 6, 7), die an zwei stoßenden Wänden (1, 2, 3) angeordnet sind, die untereinander entweder einen eingezogenen Winkel (α) oder einen vorspringenden Winkel (β) bilden, wobei die beiden Teilstücke Bestandteile einer Hohlleiste, einer Fußleiste, eines Kabelkanals oder dergleichen (4) sind, die bzw. der für die Elektro-, Telefon- und/oder DV-Verteilung in einem Zimmer, einem Büro oder einem Geschäftsraum verwendet wird, mit einem Sockel zum aufliegenden Anbringen des Winkelstücks an den Wänden, der gebildet ist durch einen schmalen, im Ganzen vertikalen Streifen (19), der gemäß einem im wesentlichen rechten Winkel gebogen ist, und zwei gebogenen, im wesentlichen horizontalen Seitenflügeln (20, 21), **dadurch gekennzeichnet, dass** die Kanten (22, 23, 24, 25) der Seitenflügel (20, 21) gemäß einem Winkel "a" oder "b" angeordnet sind, der eine komplementäre Form zu den Winkeln (α) oder (β) der stoßenden Wände (1, 2, 3) aufweist, und dessen Wert einem vorbestimmten, mit einem der Grenzwerte der Winkel (α) oder (β) der Wände verbundenen Wert entspricht, an den sich das Winkelstück anpassen soll, und dass die Innenfläche jedes Seitenflügels (20, 21) vorspringende Winkelanpassungs-Mittel (26) aufweist, die bezüglich der Hauptachsen (31, 32) des vertikalen Streifens (19) des Winkelstücks eine Fluchtlinienabweichung aufweisen, wodurch ein Anpassen an die verschiedenen Werte des Winkels (α, β) zwischen den stoßenden Wänden (1, 2, 3) ermöglicht ist.

2. Winkelstück nach Anspruch 1, **dadurch gekennzeichnet, dass** die Ausrichtachsen der Anpassungsmittel (26), die eine Anpassung an die unterschiedlichen Werte des Winkels (α) oder (β) ermöglichen, parallel zu den Winkelkanten (22, 23, 24, 25) der Seitenflügel (20, 21) sind.

3. Winkelstück nach Anspruch 1 oder 2, **dadurch gekennzeichnet, dass** die Enden von Abdeckungen (9) der beiden aufeinander folgenden Teilstücke (5, 6, 7) des Kabelkanals oder dergleichen vor dem Ende eines jeden Teilstücks (5, 6, 7) enden und so einen offenen Raum oder einen freien Bereich des Sockels (8) der Teilstücke definieren, der ein Anordnen der Anpassungsmittel (26) und ein Festlegen des Winkelstücks auf den Teilstücken ermöglicht.

4. Winkelstück nach Anspruch 3, **dadurch gekennzeichnet, dass** das Anordnen und das Festlegen des Winkelstücks (15, 16) durch direktes, frontales Einsetzen des Winkelstücks auf den freien Bereich des Sockels (8) am Ende der zu verbindenden Teilstücke erfolgt.

5. Winkelstück nach einem der vorangehenden Ansprüche, **dadurch gekennzeichnet, dass** die Anpassungsmittel (26) mit Längsnuten (12) zusammen wirken, die auf den zu verbindenden Teilstücken (5, 6, 7) angeordnet sind, um das Winkelstück auf den Teilstücken zu halten.

6. Winkelstück nach Anspruch 5, **dadurch gekennzeichnet, dass** um die Anpassungsmittel (26) ein Spiel existiert, wenn diese in den Längsnuten (12) der Teilstücke positioniert sind.

7. Winkelstück nach einem der vorangehenden Ansprüche, **dadurch gekennzeichnet, dass** die Anpassungsmittel als Reihen von Vorsprüngen (26) ausgebildet sind.

8. Winkelstück nach Anspruch 7, **dadurch gekennzeichnet, dass** jede Reihe von Vorsprüngen aus zwei rechteckigen Vorsprüngen (26) gebildet ist.

9. Winkelstück nach Anspruch 1, **dadurch gekennzeichnet, dass** im Falle eines eingezogenen Winkels (α) die Kanten (22, 23, 24, 25) der Seitenflügel (20, 21) gemäß einem Winkel (a) geschnitten sind, dessen Wert dem Maximalwert des Winkels (α) zwischen den Wänden entspricht, an den sich das Winkelstück (15) angepasst hat.

10. Winkelstück nach Anspruch 1, **dadurch gekennzeichnet, dass** das Winkelstück (16) im Falle eines vorspringenden Winkels (β) gebogen und umhüllend ausgebildet ist und dass die Kanten (22, 23, 24, 25) der Seitenflügel (20, 21) gemäß einem Winkel (b) geschnitten sind, dessen Wert dem Minimalwert des Winkels (β) der Wände entspricht, an den sich das Winkelstück (16) angepasst hat.

11. Winkelstück nach einem der vorangehenden Ansprüche, **gekennzeichnet durch** eine an seinem Rand angeordnete Verlängerung (27) geringerer Dicke, die das Stück wenigstens über einen Teilbereich seines Umfangs in Verlängerung seiner Außenfläche begrenzt und die Schaffung einer Abdeckung der Enden der zu verbindenden Kabelkanal-Teilstücke ermöglicht.

12. Winkelstück nach Anspruch 11, **dadurch gekennzeichnet, dass** die Verlängerung (27) das Winkelstück (15, 16) nicht über seinen gesamten Umfang begrenzt, so dass auf diese Weise im Bereich einer der Seitenflächen des Winkelstücks die Bildung einer Überdicke in Bezug auf die Abdeckungen (9) der zu verbindenden Kabelkanal-Teilstücke verhindert wird, so dass es möglich ist, die Kabelkanal-Teilstücke und das Winkelstück ohne Spiel an einer Deckenwand oder am Boden zu befestigen.

13. Winkelstück nach einem der vorangehenden Ansprüche, weiterhin **gekennzeichnet durch** Führungsvorsprünge (30) auf der Innenfläche des im Ganzen vertikalen Streifens (19) des Winkelstücks.

## Claims

1. Corner piece for angled connection between the opposing ends of two adjoining sections (5, 6, 7) mounted on two contiguous walls (1, 2, 3) forming between them either an internal angle (α) or an external angle (β), the two sections originating from a moulding, a plinth, a trough or the like (4) used for the wiring for electricity, telephones and/or computers in a room, an office or a building, which corner piece is of the type comprising a base which is to be surface-mounted on the walls and is formed by a generally vertical strip (19) bent substantially at a right angle, and two bent, substantially horizontal lateral wings (20, 21), **characterised in that** the edges (22, 23) and (24, 25) of the lateral wings (20, 21) are arranged at an angle "a" or "b" which has a form complementary to the angle (α) or (β) of the contiguous walls (1, 2, 3) and the value of which corresponds to a predetermined value associated with one of the limiting values of the angle (α) or (β) of the walls into which the corner piece must be fitted, and **in that** the inner face of each lateral wing (20, 21) exhibits projecting angular adaptation means (26) which are out of alignment relative to the general axes (31, 32) of the vertical strip (19) of the corner piece and allow adaptation to the different values of the angle (α, β) between the contiguous walls (1, 2, 3).

2. Corner piece according to claim 1, **characterised in that** the axes of alignment of the adaptation means (26) allowing adaptation to the different values of the angle (α) or (β) are parallel to the angled edges (22, 23 and 24, 25) of the lateral wings (20, 21).

3. Corner piece according to claim 1 or 2, **characterised in that** the ends of covers (9) of the two adjoining sections (5, 6, 7) of trough or the like finish before the end of each section (5, 6, 7), leaving an open space or a portion of base (8) of the sections free, allowing the adaptation means (26) to be positioned and the corner piece to be fixed in position on said sections.

4. Corner piece according to claim 3, **characterised in that** the positioning and fixing in position of the corner piece (15, 16) is carried out by inserting the corner piece from the front directly onto the free portion of the base (8) of the end of the sections to be connected.

5. Corner piece according to any one of the preceding claims, **characterised in that** the adaptation means (26) cooperate with longitudinal grooves (12) located on the sections (5, 6, 7) to be connected, in order to hold the corner piece on said sections.

6. Corner piece according to claim 5, **characterised in that** there is play around the adaptation means (26) when they are positioned in the longitudinal grooves (12) of the sections.

7. Corner piece according to any one of the preceding claims, **characterised in that** the adaptation means are rows of lugs (26).

8. Corner piece according to claim 7, **characterised in that** each row of lugs is constituted by two rectangular lugs (26).

9. Corner piece according to claim 1, **characterised in that**, the angle (α) being an internal angle, the edges (22, 23 and 24, 25) of the lateral wings (20, 21) are cut according to an angle (a) whose value corresponds to the maximum value of the angle (α) between the walls into which the corner piece (15) is to be fitted.

10. Corner piece according to claim 1, **characterised in that**, the angle (β) being an external angle, the corner piece (16) is bent and enveloping and **in that** the edges (22, 23 and 24, 25) of the lateral wings (20, 21) are cut according to an angle (b) whose value corresponds to the minimum value of the angle (β) of the walls into which the corner piece (16) is to be fitted.

11. Corner piece according to any one of the preceding claims, **characterised in that** it comprises at its periphery a prolongation (27) of reduced thickness, bordering the piece, over at least part of its circumference, as a continuation of its outer surface, allowing the end of the trough sections to be connected to be covered.

12. Corner piece according to claim 11, **characterised in that** the prolongation (27) does not border the corner piece (15, 16) over the totality of its circumference, thus avoiding the formation, at one of the lateral faces of the corner piece, of an excessive thickness relative to the covers (9) of the trough sections to be connected and allowing the trough sections and the corner piece to be placed flat without play against a ceiling wall or floor wall.

13. Corner piece according to any one of the preceding claims, **characterised in that** it further comprises guide lugs (30) located on the inner face of the generally vertical strip (19) of the corner piece.
